# EUROPEAN PATENT SPECIFICATION

(11) **EP 4 660 237 B1**
(45) Date of publication and mention of the grant of the patent: **18.11.2026**
(21) Application number: 24180601.7
(22) Date of filing: 06.06.2024
(51) Int. Cl.: C08L 23/12, C08L 23/14

(54) **POLYOLEFIN COMPOSITIONS COMPRISING RECYCLED POLYOLEFINS AND PROPYLENE HOMOPOLYMER**
POLYOLEFINZUSAMMENSETZUNGEN MIT RECYCELTEN POLYOLEFINEN UND PROPYLENHOMOPOLYMER
COMPOSITIONS DE POLYOLÉFINE COMPRENANT DES POLYOLÉFINES RECYCLÉES ET UN HOMOPOLYMÈRE DE PROPYLÈNE

(43) Date of publication of application: 10.12.2025
(73) Proprietor: Basell Poliolefine Italia S.r.l., 20121 Milano (IT)
(72) Inventor: HEES, Timo, 65926 Frankfurt/M. (DE)
(74) Representative: LyondellBasell

(56) References cited:
- EP-B1- 3 883 989
- WO-A1-2024/028148

## Description

### FIELD OF THE INVENTION

The present disclosure relates to polypropylene compositions containing recycled material that can be used in preparation of extruded and molded articles.

### BACKGROUND OF THE INVENTION

Polyolefins, in particular polypropylene, are increasingly consumed in large amounts for many applications, including packaging for food and other goods, fibers, automotive components, and a great variety of manufactured articles. However, the said massive use of polyolefins is creating a concern as regards the environmental impact of the waste materials generated after the first use.

In fact, large amounts of waste plastic materials are presently coming from differential recovery of municipal plastic wastes, mainly constituted of flexible packaging (cast film, blown film and BOPP film), rigid packaging, blow molded bottles and injection molded containers. Usually, through a step of separation from other polymers, such as PVC, PET or PS, two main polyolefinic fractions are obtained, namely polyethylenes (in particular HDPE LDPE, LLDPE) and polypropylenes (homopolymers, random copolymers, heterophasic copolymers).

However, the multicomponent nature of the recycled material often results in low mechanical and optical performances of the polyolefin formulations in which part of the virgin polymer is replaced by recycled polymer.

In an effort to mitigate the mechanical properties deterioration the use of compatibilizer ingredients has been proposed in the art. US5,030,662 for example discloses the use of compatibilizer of the type that reacts with the polymer matrix under heat and shearing conditions either by free radical or ionic mechanism. Examples of compatibilizers according to this document are olefin copolymers with polar monomers such as maleic anhydride or vinyl acetate.

WO2007/071494 discloses the use of a heterophasic polyolefin composition having flexural modulus equal to or lower than 600 MPa as a compatibilizer agent for a recycled polyolefin composition. In both cases, the effect of the compatibilizer was that of improving the mechanical properties while the optical properties had not been tested. In fact, improving the optical properties of polyolefin composition including substantial amounts of recycled material is a demanding task because the multiplicity of components chemically different to each other makes certain optical properties such as transparency difficult to be achieved at a satisfactory extent.

EP 3 883 989 relates to a polypropylene composition comprising a polypropylene homopolymer and a propylene 1-hexene copolymer. This composition is completely different from that one of the present disclosure.

The recycled polyolefin can derive from streams of post-consumer waste (PCW) or post-industrial waste (PIW).

One of the key problems in polyolefin recycling, is the difficulty to quantitatively separate the various types of polymers so that the commercially available recycled products are almost invariably contaminated with heterogeneous materials of various source.

This fact leads to the consequence that polymer compositions including recycled materials are perceived of being affected by lower reliability and lower performances with respect to the compositions made of solely virgin polymers. Furthermore usually polymer compositions including recycled materials have low haze and it would be desirable to improve this properties

It has now been unexpectedly found that it is possible to have an improved property profile especially in terms of better impact properties and lower haze when a recycled polymers is added to a virgin polypropylene.

### SUMMARY OF THE INVENTION

Thus an object of the present disclosure is a recycled polyolefin composition comprising:
A) from 40 wt% to 65 wt%; preferably from 42 wt% to 60 wt%, more preferably from 44 wt% to 55 wt%, of a recycled polypropylene composition having:
   i) ethylene derived units content, measured by ¹³C-NMR, ranging from 0.3 mol% to 1.8 mol%, preferably ranging from 0.4 mol% to 1.7 mol%, more preferably ranging from 0.6 mol% to 1.8 mol%,;
   ii) 1-butene derived units content, measured by ¹³C-NMR, ranging from 0.4 mol% to 2.5 mol%, preferably ranging from 0.5 mol% to 2.0 mol%, more preferably ranging from 0.7 mol% to 1.5 mol%;
   iii) propylene derived units content, measured by ¹³C-NMR, higher than 90.0 mol%; preferably higher than 93.0 mol%; more preferably higher than 95.0 mol%;
   iv) the ¹³C-NMR sequences BBB wherein B is 1-butene derived unit ranging from 0.4 mol% to 2.5 mol%, preferably ranging from 0.5 mol% to 2.0 mol%, more preferably ranging from 0.7 mol% to 1.5 mol%;
   v) Melt Flow Rate, determined according to the method ISO 1133 (230° C, 2.16 kg), ranging from 0.5 g/10 min to 20.0 g/10 min; preferably from 2.0 g/10 min to 15.0 g/10 min, more preferably from 5.0 g/10 min to 13.0 g/10 min;
   vi) Xylene Soluble fraction at 25°C ranging from 4.8 wt% to 10.7 wt%, preferably ranging from 5.3 wt% to 9.8 wt%, more preferably ranging from 6.2 wt% to 9.2 wt%.
(B) from 35 wt% to 60 wt%; preferably from 40 wt% to 58 wt%, more preferably from 45 wt% to 56 wt%, of a propylene homopolymer having a Melt Flow Rate, determined according to ISO 1133 (230° C, 2.16 kg), ranging from 4.0 g/10 min to 22.0 g/10 min; preferably from 7.0 g/10 min to 20.0 g/10 min; more preferably from 9.0 g/10 min to 16.0 g/10 min; and a Xylene Soluble fraction at 25°C, determined according to ISO 16152: 2005, ranging from 1.5 wt% to 4.6 wt%; preferably from 2.2 wt% to 4.3 wt%; more preferably from 2.3 wt% to 4.1 wt%;

wherein the Melt Flow Rate of the polypropylene composition, determined according to ISO 1133 (230° C, 2.16 kg), ranges from 34.0 g/10 min to 64.0 g/10 min; preferably from 37.0 g/10 min to 61.0 g/10 min, more preferably from 41.0 g/10 min to 57.0 g/10 min;
the sum of the amounts of (A) and (B) being referred to the total weight of (A) and (B) is 100 wt%.

### DETAILED DESCRIPTION OF THE INVENTION

Preferably the recycled polypropylene composition A) is a Post-Industrial Resin (PIR). In general PIRs are raw materials produced from industrial waste.

Preferably the recycled polypropylene composition component A) does not contain limonene.

Preferably the recycled polypropylene composition component A) has at least one of the following features:
i) the ¹³C-NMR sequences XEX wherein X can be a propylene derived unit or a 1-butene derived unit, ranging from 0.20 mol% to 0.55 mol%; preferably ranging from 0.25 mol% to 0.50 mol%, more preferably ranging from 0.32 mol% to 0.46 mol%;
ii) the ¹³C-NMR sequences EEE ranging from 0.05 mol% to 0.40 mol%; preferably ranging from 0.10 mol% to 0.35 mol%, more preferably ranging from 0.15 mol% to 0.30 mol%;
iii) the ¹³C-NMR sequences XBX , X can be a propylene derived unit or a 1-butene derived unit ranging from 0.50 mol% to 2.20 mol%, preferably ranging from 0.68 mol% to 1.90 mol%, more preferably ranging from 0.75 mol% to 1.64 mol%;
iv) the ¹³C-NMR sequences BBE are not present;

Preferably the propylene homopolymer component B) has a Charpy notched impact strength at 23°C, determined according to ISO 179-1eA, and ISO 1873-2, ranging from 2.0 to 9.0 kJ/m², more preferably ranging from 3.0 to 6.0 kJ/m^{2:} more preferably ranging from 3.5 to 5.2 kJ/m².

Preferably the propylene homopolymer component B) has a Tensile modulus, determined according to ISO 527, ranging between 980 and 1980 MPa, more preferably between 1180 and 1780 MPa; more preferably between 1280 and 1680 MPa.

The recycled polyolefin composition according to the present disclosure has a Tensile Modulus, determined according to ISO 527, ranging between 800 and 1800 MPa, preferably between 850 and 1500 MPa; more preferably between 900 and 1200 MPa.

Preferably the recycled polypropylene composition has at least one of the following features:
- Haze, measured on 1 mm plaque ranging from 45 % to 65 %; preferably from 50 % to 60%;
- melting point ranging from 150 °C to 163°C; preferably ranging from 155 °C to 161°C;
- Tc ranging from 108 °C to 118°C; preferably ranging from 110 °C to 115°C.

The Melt Flow Rate value( MFR) of the recycled polyolefin composition can be obtained even by subsequent chemical treatment (chemical visbreaking).

The chemical visbreaking of the polymer is carried out in the presence of free radical initiators, such as the peroxides.

The peroxides which are most conveniently used in the polymer visbreaking process have a decomposition temperature preferably ranging from 150°C to 250°C. Examples of said peroxides are di-tert-butyl peroxide, dicumyl peroxide, 2,5-dimethyl-2,5-di(tert-butylperoxy)hexyne and 2,5-dimethyl-2,5-di(tert-butylperoxy)hexane, all of which are commercially available.

The quantity of peroxide necessary for the visbreaking process preferably ranges from 0.001 to 0.5% by weight of the polymer, more preferably from 0.001 to 0.2%.

The term "copolymer" as used herein refers to polymers with two different recurring units in the chain. By "ambient temperature" and "room temperature" is meant a temperature of 25 °C.

By the term "crystalline polypropylene" is meant in the present application a propylene polymer having an amount of isotactic pentads (mmmm), measured by ¹³C-MNR on the fraction insoluble in xylene at 25° C, higher than 70 molar %; by "elastomeric" polymer is meant a polymer having solubility in xylene at ambient temperature higher than 50 wt%.

Component B) can be obtained by polymerizing propylene with processes commonly known in the art. Component B for example can be commercially available such as Moplen HP500N sold by Lyondellbasell.

Components B) can be prepared by polymerizing propylene in the presence of a catalyst comprising the product of the reaction between:
i) a solid catalyst component comprising Ti, Mg, Cl, and at least an internal electron donor compound;
ii) an alkylaluminum compound and,
iii) an external electron-donor compound; preferably the external donor compound has the general formula:

(R⁷)ₐ(R⁸)_{b}Si(OR⁹)_{c}, where a and b are integers from 0 to 2, c is an integer from 1 to 4 and the sum (a+b+c) is 4; R⁷, R⁸, and R⁹, are alkyl, cycloalkyl or aryl radicals with 1-18 carbon atoms optionally containing heteroatoms.

The internal donor is preferably selected from the esters of mono or dicarboxylic organic acids such as benzoates, malonates, phthalates and certain succinates. Examples of internal donors are described in US 4522930A, EP 045977A2 and international patent applications WO 00/63261 and WO 01/57099. Particularly suited are the phthalic acid esters and succinate acids esters. Alkylphthalates are preferred, such as diisobutyl, dioctyl and diphenyl phthalate and benzyl-butyl phthalate.

The particles of solid component (i) may have substantially spherical morphology and average diameter ranging between 5 and 150 µm, preferably from 20 to 100 µm and more preferably from 30 to 90 µm. As particles having substantially spherical morphology, those are meant wherein the ratio between the greater axis and the smaller axis is equal to or lower than 1.5 and preferably lower than 1.3.

The amount of Mg may preferably range from 8 to 30% more preferably from 10 to 25wt. %.

The amount of Ti may range from 0.5 to 7% and more preferably from 0.7 to 5wt. %.

According to one method, the solid catalyst component (i) can be prepared by reacting a titanium compound of formula Ti(OR)_{q-y}X_{y}, where q is the valence of titanium and y is a number between 1 and q, preferably TiCl₄, with a magnesium chloride deriving from an adduct of formula MgCl₂•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is of lower than 3, preferably between 0.1 and 2.5. The reaction with the Ti compound can be carried out by suspending the adduct (dealcoholated or as such) in cold TiCl₄; the mixture is heated up to 80-130°C and kept at this temperature for 0.5-2 hours. The treatment with TiCl₄ can be carried out one or more times. The electron donor compound can be added in the desired ratios during the treatment with TiCl₄.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et3Cl₃, possibly in mixture with the above cited trialkylaluminums. The Al/Ti ratio is higher than 1 and may preferably range between 50 and 2000.

Particularly preferred are the silicon compounds (iii) in which a is 1, b is 1, c is 2, at least one of R⁷ and R⁸ is selected from branched alkyl, cycloalkyl or aryl groups with 3-10 carbon atoms optionally containing heteroatoms and R⁹ is a C1-C10 alkyl group, in particular methyl.

Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, R⁸ is a branched alkyl or cycloalkyl group, optionally containing heteroatoms, and R⁹ is methyl. Examples of such preferred silicon compounds are cyclohexyltrimethoxysilane, t-butyltrimethoxysilane and thexyltrimethoxysilane.

The external electron donor compound (iii) is used in such an amount to give a molar ratio between the organoaluminum compound and said external electron donor compound (iii) of from 0.1 to 200, preferably from 1 to 100 and more preferably from 3 to 50.

The following examples are given in order to illustrate, but not limit the present disclosure.

### EXAMPLES

### Characterization methods

**Melting temperature and crystallization temperature:** Determined by differential scanning calorimetry (DSC). The melting point has been measured by using a DSC instrument according to ISO 11357-3, at scanning rate of 20 °C/min both in cooling and heating, on a sample of weight between 5 and 7 mg, under inert N2 flow. Instrument calibration made with Indium.

**Melt Flow Rate:** Determined according to the method ISO 1133-1 (230° C, 2.16 kg).

**Xylene Soluble fraction (X.S.) at 25°C:** Xylene Solubles at 25°C have been determined according to ISO 16152: 2005; with solution volume of 250 ml, precipitation at 25°C for 20 minutes, 10 of which with the solution in agitation (magnetic stirrer), and drying at 70°C.

Intrinsic Viscosity (I.V.): The sample is dissolved by tetrahydronaphthalene at 135 °C and then it is poured into the capillary viscometer. The viscometer tube (Ubbelohde type) is surrounded by a cylindrical glass jacket; this setup allows temperature control with a circulating tempered liquid. The downward passage of the meniscus is timed by a photoelectric device. The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [η].

**Comonomer determination via ¹³C-NMR:** ¹³C-NMR spectra were acquired on a Bruker AV600 spectrometer equipped with cryo probe, operating at 150.91 MHz in the Fourier transform mode at 120 °C. The peak of the S_{δδ} carbon (nomenclature according C.J. Carman, R.A. Harrington and C.E. Wilkes, Macromolecules, 10, 3, 536 (1977)) was used as internal reference at 29.9 ppm. About 30 mg of sample were dissolved in 0.5 ml of 1,1,2,2 tetrachloro ethane d₂ at 120 °C w. Each spectrum was acquired with a 90 ° pulse, 15 seconds of delay between pulses and CPD to remove ¹H-¹³C coupling. 512 transients were stored in 65 K data points using a spectral window of 9000 Hz. Triad distribution was obtained using the following relations: $XPX = 100 {I}_{8} / Σ$ $XPE = 100 {I}_{5} / Σ$ $EPE = 100 {I}_{4} / Σ$ $XBX = 100 {I}_{3} / Σ$ $XBE = 100 {I}_{2} / Σ$ $XEX = 100 {I}_{9} / Σ$ $XEE = 100 {I}_{1} / Σ$ $EEE = 100 \left(0.5 {I}_{7}+0.25 {I}_{6}\right) / Σ$ Where $Σ = {I}_{8} + {I}_{5} + {I}_{4} + {I}_{3} + {I}_{2} + {I}_{9} + {I}_{1} + 0.5 {I}_{7} + 0.25 {I}_{6}$ I are the areas of the corresponding carbon as reported in Table 1 and X can be propylene or 1-butene

The molar content of ethylene, propylene and 1-butene is obtained from triads using the following relations: $P \left(m%\right) = XPX + XPE + EPE$ $B \left(m%\right) = XBX + XBE + EBE$ $E \left(m%\right) = EEE + XEE + XEX$ Molar content was transformed in weight using monomers molecular weight.

**Table 1 Assignments of the ¹³C-NMR spectrum of ethylene/propylene/1-butene containing polymers**

| Number | Chemical Shift (ppm) | Carbon | Sequence |
|---|---|---|---|
| 1 | 37.64 - 37.35 | S_{αδ} | PEE |
| 2 | 37.35 - 37.15 | T_{βδ} | XBE |
| 3 | 35.27 - 34.92 | T_{ββ} | XBX |
| 4 | 33.29 - 33.15 | T_{δδ} | EPE |
| 5 | 30.93 - 30.77 | T_{βδ} | XPE |
| 6 | 30.35 - 30.26 | S_{γδ} | PEEE |
| 7 | 29.97 - 29.85 | S_{δδ} | EEE |
| 8 | 29.14 -28.31 | T_{ββ} | XPX |
| 9 | 24.88 - 24.14 | S_{ββ} | XEX |

### Samples for the mechanical tests

Samples have been obtained according to ISO 1873-2:2007.
**Charpy notched impact:** determined according to ISO 179-1eA, and ISO 1873-2
**Elongation at yield:** measured according to ISO 527.
**Elongation at break:** measured according To ISO 527
**Stress at break:** measured according to ISO 527.
**Haze (on 1 mm plaque)**

According to the method used, 5x5 cm specimens are cut from molded plaques of 1 mm thickness and the haze value is measured using a Gardner photometric unit connected to a Hazemeter type UX-10 or an equivalent instrument having G.E. 1209 light source with filter "C". Reference samples of known haze are used for calibrating the instrument. The plaques to be tested are produced according to the following method.

75x75x1 mm plaques are molded with a GBF Plastinjector G235190 Injection

Molding Machine, 90 tons under the following processing conditions:
Screw rotation speed: 120 rpm
Back pressure: 10 bar
Melt temperature: 260°C
Injection time: 5 sec
Switch to hold pressure: 50 bar
First stage hold pressure: 30 bar
Second stage pressure: 20 bar
Hold pressure profile: First stage 5 sec
Second stage 10 sec
Cooling time: 20 sec
Mold water temperature: 40°C

### Tensile Modulus according to ISO 527.

### Component A

Component A is a PIR having the features reported in Table 1

**Table 1**

| | | **Ex1** |
|---|---|---|
| ethylene | **mol%** | **1.0.** |
| **1-butene** | **mol%** | **0.8** |
| XEX | **mol%** | **0.44** |
| EEE | **mol%** | **0.29** |
| XBX | **mol%** | **0.84** |
| BBE | **mol%** | **0.00** |
| MFR, 230 °C 2.16 kg, | **g/10 min** | **8.3** |
| X.S. | **wt%** | **7.0** |

### Component B)

Component B) is a commercial propylene homopolymer sold by Lyondellbasell under the tradename of Moplen HP500N having an MFR (230°C and 2.16 kg) of 12.0 g/10 min; a fraction soluble in xylene at 25°C of 3.1 wt%; Charpy notched impact strength at 23°C of 4 kJ/m² and a tensile modulus of 1400 MPa.

Comparative component B1) is a propylene ethylene copolymer sold by Lyondellbasell with the tradename of Moplen EP500V having an MFR of 100 g/10 min (230°C/2.16kg), Xylene Soluble fraction of 18 wt% at 25°C and an ethylene content of 7.6 wt% determined via ¹³C-NMR.

### Example 1 and comparative example 2

Component A) has been blended with B) or B1) in the amounts indicated in Table 3.

**Table 3**

| | Ex 1 | Comp Ex 2 |
|---|---|---|
| Component A | 50 | 70 |
| Component B | 50 | 0 |
| Component B1 | 0 | 30 |

To reach the target MFR value, 710 ppm of peroxide Enox 101 (2-5-Dimethyl-2-5-di-tert-butylperoxy-hexane) was added in both formulations during extrusion.

The features of the composition of example 1 and comparative example 2 are reported in Table 4.

**Table 4**

| | **Units** | **Ex 1** | **Comp Ex 2** |
|---|---|---|---|
| Melt Flow Rate | g/10min | 45 | 43 |
| Haze 1 mm plaque | % | 56 | 77 |
| Tensile Modulus | N/mm2 | 1170 | 1130 |
| Tm | °C | 158.5 | 158.2 |
| Tc | °C | 112.2 | 112.7 |

The composition of example 1 shows a lower haze with substantially the same modulus.

## Claims

1. A recycled polyolefin composition comprising:
A) from 40 wt% to 65 wt%; of a recycled polypropylene composition having:
i) ethylene derived units content, measured by ¹³C-NMR, ranging from 0.3 mol% to 1.8 mol%;
ii) 1-butene derived units content, measured by ¹³C-NMR, ranging from 0.4 mol% to 2.5 mol%;
iii) propylene derived units content, measured by ¹³C-NMR, higher than 90.0 mol%;
iv) the ¹³C NMR sequences BBB wherein B is 1-butene derived unit ranging from 0.4 mol% to 2.5 mol%;
v) Melt Flow Rate determined according to the method ISO 1133 (230° C, 2.16 kg), ranging from 0.5 g/10 min to 20.0 g/10 min;
vi) Xylene Soluble fraction at 25°C determined according to ISO 16152: 2005 ranging from 4.8 wt% to 10.7 wt%;
B) from 35 wt% to 60 wt% of a propylene homopolymer having a Melt Flow Rate, determined according to the method ISO 1133 (230° C, 2.16 kg), ranging from 4.0 g/10 min to 22.0 g/10 min; and a Xylene Soluble fraction at 25°C, determined according to ISO 16152: 2005, ranging from 1.5 wt% to 4.6 wt%;
Wherein the Melt Flow Rate of the recycled polypropylene composition, determined according to the method ISO 1133 (230° C, 2.16 kg), ranges from 34.0 g/10 min to 64.0 g/10 min;
the sum of the amounts of (A) and (B) and being referred to the total weight of (A) and (B) is 100wt%.

2. The recycled polyolefin composition according to claim 1 wherein:
component (A) ranges from 42 wt% to 60 wt%,
component (B) ranges from 40 wt% to 58 wt%.

3. The recycled polyolefin composition according to anyone of claims 1-2 wherein component A) has ethylene derived units content, measured by ¹³C-NMR, ranging from 0.4 mol% to 1.7 mol%.

4. The recycled polyolefin composition according to anyone of claims 1-3 wherein component A) has 1-butene derived units content, measured by ¹³C-NMR, ranging from 0.5 mol% to 2.0 mol%.

5. The recycled polyolefin composition according to anyone of claims 1-4 wherein component (B) has Melt Flow Rate, determined according to the method ISO 1133 (230° C, 2.16 kg), ranging from 7.0 g/10 min to 20.0 g/10 min.

6. The recycled polyolefin composition according to anyone of claims 1-5 wherein component (B) has and a Xylene Soluble fraction at 25°C, determined according to ISO 16152: 2005, ranging from 2.2 wt% to 4.3 wt%.

7. The recycled polyolefin composition according to anyone of claims 1-6 wherein component (B) has a Melt Flow Rate, determined according to the method ISO 1133 (230° C, 2.16 kg), ranging from 9.0 g/10 min to 16.0 g/10min;

8. The recycled polyolefin composition according to anyone of claims 1-7 wherein:
component (A) ranges from 44 wt% to 55 wt%,
component (B) ranges from 45 wt% to 56 wt%.

9. The recycled polyolefin composition according to anyone of claims 1-8 wherein in component A) the Xylene Soluble fraction at 25°C ranges from 6.2 wt% to 9.2 wt%.

10. The recycled polyolefin composition according to anyone of claims 1-9 wherein in component A) the ¹³C-NMR sequences BBB wherein B is 1-butene derived unit ranges from 0.5 mol% to 2.0 mol%.

11. The recycled polyolefin composition according to anyone of claim 1-10 wherein in component A) the Melt Flow Rate, determined according to the method ISO 1133 (230° C, 2.16 kg), ranges from 2.0 g/10 min to 15.0 g/10 min.

12. The recycled polyolefin composition according to anyone of claim 1-11 wherein in component A) the ¹³C-NMR sequences EEE ranges from 0.05 mol% to 0.40 mol%.

13. The recycled polyolefin composition according to anyone of claim 1-11 wherein in component A) the ¹³C-NMR sequences XEX wherein X can be a propylene derived unit or a 1-butene derived unit, ranges from 0.20 mol% to 0.55 mol%.

14. The recycled polyolefin composition according to anyone of claim 1-13 wherein in component A) the ¹³C-NMR sequences BBE are not present.

15. An injection molded article made from c recycled polyolefin composition according to claims 1-14.

## Patentansprüche

1. Eine recycelte Polyolefin-Zusammensetzung, umfassend:
A) 40 Gew.-% bis 65 Gew.-% einer recycelten Polypropylen-Zusammensetzung mit:
i) einen Gehalt an von Ethylen abgeleiteten Einheiten, gemessen mittels ¹³C-NMR, im Bereich von 0,3 Mol-% bis 1,8 Mol-%;
ii) einen Gehalt an von 1-Buten abgeleiteten Einheiten, gemessen mittels ¹³C-NMR, im Bereich von 0,4 Mol-% bis 2,5 Mol-%;
iii) Gehalt an von Propylen abgeleiteten Einheiten, gemessen mittels ¹³C-NMR, von mehr als 90,0 Mol-%;
iv) die ¹³C-NMR-Sequenzen BBB, wobei B eine von 1-Buten abgeleitete Einheit ist, im Bereich von 0,4 Mol-% bis 2,5 Mol-%;
v) Schmelzflussrate, bestimmt nach der Methode ISO 1133 (230 °C, 2,16 kg), im Bereich von 0,5 g/10 min bis 20,0 g/10 min;
vi) der gemäß ISO 16152:2005 bei 25 °C bestimmte xylollösliche Anteil im Bereich von 4,8 Gew.-% bis 10,7 Gew.-%;
B) 35 Gew.-% bis 60 Gew.-% eines Propylen-Homopolymers mit einem Schmelzindex, bestimmt nach der Methode ISO 1133 (230 °C, 2,16 kg), im Bereich von 4,0 g/10 min bis 22,0 g/10 min; und einer gemäß ISO 16152:2005 bei 25 °C bestimmten xylollöslichen Fraktion im Bereich von 1,5 Gew.-% bis 4,6 Gew.-%;
wobei der Schmelzindex der recycelten Polypropylen-Zusammensetzung, bestimmt nach dem Verfahren ISO 1133 (230 °C, 2,16 kg), im Bereich von 34,0 g/10 min bis 64,0 g/10 min liegt;
wobei die Summe der Mengen von (A) und (B), bezogen auf das Gesamtgewicht von (A) und (B), 100 Gew.-% beträgt.

2. Die recycelte Polyolefin-Zusammensetzung nach Anspruch 1, wobei:
Der Anteil der Komponente (A) liegt zwischen 42 Gew.-% und 60 Gew.-%,
Komponente (B) liegt im Bereich von 40 Gew.-% bis 58 Gew.-%.

3. Die recycelte Polyolefinzusammensetzung gemäß einem der Ansprüche 1-2, wobei Komponente A) einen Gehalt an von Ethylen abgeleiteten Einheiten, gemessen mittels ¹³C-NMR, im Bereich von 0,4 Mol-% bis 1,7 Mol-% aufweist.

4. Die recycelte Polyolefin-Zusammensetzung gemäß einem der Ansprüche 1-3, wobei die Komponente A) einen Gehalt an von 1-Buten abgeleiteten Einheiten, gemessen mittels ¹³C-NMR, im Bereich von 0,5 Mol-% bis 2,0 Mol-% aufweist.

5. Die recycelte Polyolefin-Zusammensetzung gemäß einem der Ansprüche 1-4, wobei die Komponente (B) eine Schmelzflussrate, bestimmt nach dem Verfahren ISO 1133 (230 °C, 2,16 kg), im Bereich von 7,0 g/10 min bis 20,0 g/10 min aufweist.

6. Die recycelte Polyolefin-Zusammensetzung gemäß einem der Ansprüche 1 bis 5, wobei die Komponente (B) einen Xylol-löslichen Anteil bei 25 °C, bestimmt gemäß ISO 16152:2005, im Bereich von 2,2 Gew.-% bis 4,3 Gew.-% aufweist.

7. Die recycelte Polyolefin-Zusammensetzung gemäß einem der Ansprüche 1 bis 6, wobei die Komponente (B) eine Schmelzflussrate, bestimmt nach dem Verfahren ISO 1133 (230 °C, 2,16 kg), im Bereich von 9,0 g/10 min bis 16,0 g/10 min aufweist;

8. Die recycelte Polyolefin-Zusammensetzung gemäß einem der Ansprüche 1 bis 7, wobei:
die Komponente (A) im Bereich von 44 Gew.-% bis 55 Gew.-% liegt,
Komponente (B) einen Anteil von 45 Gew.-% bis 56 Gew.-% aufweist.

9. Die recycelte Polyolefin-Zusammensetzung gemäß einem der Ansprüche 1 bis 8, wobei in Komponente A) der Anteil der bei 25 °C in Xylol löslichen Fraktion zwischen 6,2 Gew.-% und 9,2 Gew.-% liegt.

10. Die recycelte Polyolefin-Zusammensetzung gemäß einem der Ansprüche 1 bis 9, wobei in Komponente A) der Anteil der¹³C-NMR-Sequenzen BBB, wobei B eine von 1-Buten abgeleitete Einheit ist, zwischen 0,5 Mol-% und 2,0 Mol-% liegt.

11. Die recycelte Polyolefin-Zusammensetzung gemäß einem der Ansprüche 1 bis 10, wobei in Komponente A) die Schmelzflussrate, bestimmt nach dem Verfahren ISO 1133 (230 °C, 2,16 kg), im Bereich von 2,0 g/10 min bis 15,0 g/10 min liegt.

12. Die recycelte Polyolefin-Zusammensetzung gemäß einem der Ansprüche 1 bis 11, wobei in Komponente A) die ¹³C-NMR-Sequenz EEE im Bereich von 0,05 Mol-% bis 0,40 Mol-% liegt.

13. Die recycelte Polyolefin-Zusammensetzung gemäß einem der Ansprüche 1 bis 11, wobei in Komponente A) die ¹³C-NMR-Sequenz XEX, wobei X eine von Propylen abgeleitete Einheit oder eine von 1-Buten abgeleitete Einheit sein kann, im Bereich von 0,20 Mol-% bis 0,55 Mol-% liegt.

14. Die recycelte Polyolefin-Zusammensetzung gemäß einem der Ansprüche 1 bis 13, wobei in Komponente A) die ¹³C-NMR-Sequenzen BBE nicht vorhanden sind.

15. Ein Spritzgussartikel, hergestellt aus einer recycelten Polyolefin-Zusammensetzung gemäß den Ansprüchen 1 bis 14.

## Revendications

1. Une composition de polyoléfine recyclée comprenant :
A) de 40 % en poids à 65 % en poids d'une composition de polypropylène recyclé présentant :
i) une teneur en motifs dérivés de l'éthylène, mesurée par RMN au¹³C, comprise entre 0,3 % en moles et 1,8 % en moles ;
ii) une teneur en motifs dérivés du 1-butène, mesurée par RMN au¹³C, comprise entre 0,4 % en moles et 2,5 % en moles ;
iii) la teneur en motifs dérivés du propylène, mesurée par RMN au¹³C, supérieure à 90,0 % en moles ;
iv) les séquences de RMN au ¹³C de type BBB, où B représente un motif dérivé du 1-butène, compris entre 0,4 % en moles et 2,5 % en moles ;
v) un indice de fluidité à chaud déterminé selon la méthode ISO 1133 (230 °C, 2,16 kg), compris entre 0,5 g/10 min et 20,0 g/10 min ;
vi) la fraction soluble dans le xylène à 25 °C, déterminée selon la norme ISO 16152:2005, comprise entre 4,8 % en poids et 10,7 % en poids ;
B) de 35 % en poids à 60 % en poids d'un homopolymère de propylène présentant un indice de fluidité à chaud, déterminé selon la méthode ISO 1133 (230 °C, 2,16 kg), compris entre 4,0 g/10 min et 22,0 g/10 min ; et une fraction soluble dans le xylène à 25 °C, déterminée conformément à la norme ISO 16152:2005, comprise entre 1,5 % en poids et 4,6 % en poids ;
dans laquelle l'indice de fluidité à chaud de la composition de polypropylène recyclé, déterminé selon la méthode ISO 1133 (230 °C, 2,16 kg), est compris entre 34,0 g/10 min et 64,0 g/10 min ;
la somme des quantités de (A) et (B), rapportée au poids total de (A) et (B), est de 100 % en poids.

2. Composition de polyoléfine recyclée selon la revendication 1, dans laquelle :
le composant (A) est compris entre 42 % et 60 % en poids,
le composant (B) est compris entre 40 % et 58 % en poids.

3. Composition de polyoléfine recyclée selon l'une quelconque des revendications 1 à 2, dans laquelle le composant A) présente une teneur en motifs dérivés de l'éthylène, mesurée par RMN ^{au (13)}C, comprise entre 0,4 % en moles et 1,7 % en moles.

4. Composition de polyoléfine recyclée selon l'une quelconque des revendications 1 à 3, dans laquelle le composant A) présente une teneur en motifs dérivés du 1-butène, mesurée par RMN au¹³C, comprise entre 0,5 % en moles et 2,0 % en moles.

5. Composition de polyoléfine recyclée selon l'une quelconque des revendications 1 à 4, dans laquelle le composant (B) présente un indice de fluidité à chaud, déterminé selon la méthode ISO 1133 (230 °C, 2,16 kg), compris entre 7,0 g/10 min et 20,0 g/10 min.

6. Composition de polyoléfine recyclée selon l'une quelconque des revendications 1 à 5, dans laquelle le composant (B) présente une fraction soluble dans le xylène à 25 °C, déterminée selon la norme ISO 16152:2005, comprise entre 2,2 % en poids et 4,3 % en poids.

7. Composition de polyoléfine recyclée selon l'une quelconque des revendications 1 à 6, dans laquelle le composant (B) présente un indice de fluidité à chaud, déterminé selon la méthode ISO 1133 (230 °C, 2,16 kg), compris entre 9,0 g/10 min et 16,0 g/10 min ;

8. Composition de polyoléfine recyclée selon l'une quelconque des revendications 1 à 7, dans laquelle :
le composant (A) est compris entre 44 % et 55 % en poids,
le composant (B) est compris entre 45 % en poids et 56 % en poids.

9. Composition de polyoléfine recyclée selon l'une quelconque des revendications 1 à 8, dans laquelle, dans le composant A), la fraction soluble dans le xylène à 25 °C est comprise entre 6,2 % en poids et 9,2 % en poids.

10. Composition de polyoléfine recyclée selon l'une quelconque des revendications 1 à 9, dans laquelle, dans le composant A), la séquence ¹³C-RMN BBB, où B représente un motif dérivé du 1-butène, est comprise entre 0,5 % en moles et 2,0 % en moles.

11. Composition de polyoléfine recyclée selon l'une quelconque des revendications 1 à 10 , dans laquelle, dans le composant A), l'indice de fluidité à chaud, déterminé selon la méthode ISO 1133 (230 °C, 2,16 kg), est compris entre 2,0 g/10 min et 15,0 g/10 min.

12. Composition de polyoléfine recyclée selon l'une quelconque des revendications 1 à 11, dans laquelle, dans le composant A), la séquence EEE ^{du (13)}RMN C-N varient entre 0,05 % en moles et 0,40 % en moles.

13. Composition de polyoléfine recyclée selon l'une quelconque des revendications 1 à 11, dans laquelle, dans le composant A), la séquence ¹³C-RMN de type XEX, où X peut être un motif dérivé du propylène ou un motif dérivé du 1-butène, est comprise entre 0,20 % en moles et 0,55 % en moles.

14. Composition de polyoléfine recyclée selon l'une quelconque des revendications 1 à 13, dans laquelle, dans le composant A)^{,}les séquences RMN au carbone¹³de type BBE ne sont pas présentes.

15. Article moulé par injection fabriqué à partir d'une composition de polyoléfine recyclée selon les revendications 1 à 14.
